# EUROPEAN PATENT SPECIFICATION

(11) **EP 2 869 100 B1**
(45) Date of publication and mention of the grant of the patent: **10.05.2023**
(21) Application number: 13810671.1
(22) Date of filing: 31.05.2013
(51) Int. Cl.: G02B 6/36, G01B 11/16, G01D 5/353, G01M 11/00

(54) **ADHESION METHOD AND ADHESION EQUIPMENT, AND METHOD OF MANUFACTURING A STRUCTURE**
HAFTVERFAHREN UND HAFTVORRICHTUNG SOWIE VERFAHREN ZUR HERSTELLUNG EINER STRUKTUR
PROCÉDÉ D'ADHÉRENCE ET ÉQUIPEMENT D'ADHÉRENCE, ET PROCÉDÉ DE FABRICATION DE STRUCTURE

(30) Priority: 25.06.2012 JP 2012141981
(43) Date of publication of application: 06.05.2015
(73) Proprietor: Mitsubishi Heavy Industries, Ltd., Tokyo 108-8215 (JP)
(72) Inventor: SAITO, Nozomi, Tokyo 108-8215 (JP); YARI, Takashi, Tokyo 108-8215 (JP)
(74) Representative: Henkel & Partner mbB
(86) International application number: PCT/JP2013/065148
(87) International publication number: WO 2014/002681

(56) References cited:
- EP-A1- 2 367 036
- EP-A1- 2 739 996
- WO-A2-2012/012362
- DE-A1- 3 019 935
- JP-A- H01 298 604
- JP-A- H01 298 604
- JP-A- 2006 114 463
- JP-A- 2010 079 273
- JP-A- 2012 056 823
- US-A- 3 860 405

## Description

### {Technical Field}

The present invention relates to a method for bonding an optical fiber to a surface of a structural body such as an aircraft and a wind blade, and a bonding tool used for bonding an optical fiber, and a method for producing a structural body.

### {Background Art}

In soundness evaluation of a structural body using an optical fiber, an optical fiber is bonded and attached to a surface of a structural body. A strain generated in the structural body is transmitted to the optical fiber, and the strain generated in the optical fiber is measured, so that damage to the structural body is detected. For example, in a structural body obtained by bonding members, separation in a bonded portion of the structural body is detected by measuring a strain generated in an optical fiber. Examples of the structural body include an aircraft, an automobile, and a wind blade.

As described in JP H7-151945A and JP 2004-151702A, in the optical fiber used for a sensor, a resin coating is formed on an outer periphery of a strand having a core and a clad. To surely transmit a strain generated in the structural body to the optical fiber, the optical fiber is generally bonded to the structural body by a chemically reactive adhesive such as an epoxy-based adhesive.

The optical fiber is bonded to the structural body by using a chemically reactive adhesive in a following process.

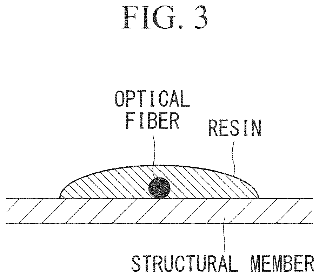

First, an adhesive obtained by mixing a primary agent and a curing agent is applied to a predetermined position on a surface of the structural body. Subsequently, the optical fiber is placed at a predetermined position on the adhesive. The adhesive is further applied onto the optical fiber. At this point, the optical fiber is coated with the adhesive as shown in a sectional view in Fig. 3. After that, the adhesive is left to be cured.

US 3860405B and EP 2739996A describe processes of attaching an optical fiber to a surface of a substrate by means of a thermoplastic material, which can be either the material of a coating of the fiber or an additional material supplied to the bonding site.

DE 3019935 A1 discloses a bonding tool that is proposed for bonding a reinforcing core material coated by a thermoplastic adhesive to a substrate surface for reinforcing a substrate material with a secondary material like a strand, a tape or wire, preferably in fields of producing laminated sheet materials. The bonding tool has a guide tube through which the reinforcing core material is freely fed or guided to an enlarged internal space inside a block upstream of an application shoe where the guide tube is joined to a heating air channel guiding heated air from a heater towards the reinforcing core material. A molding roller is provided to press the reinforcing core material against the substrate surface after the reinforcing core material is applied to the surface by means of the shoe.

EP 2367036 A1 discloses a method and an apparatus for attaching an optical fiber to a surface of a substrate. The optical fiber material is dispensed from a spool, is guided and held down on the substrate, and is subsequently treated with ultraviolet or infrared radiation or hot air from a radiation source so that the optical fiber adheres to the substrate.

WO 2012-012362 A2 discloses a device for attaching a communication line to a target surface of a building.

### {Summary of Invention}

### {Technical Problem}

In the aforementioned soundness evaluation using the optical fiber, in order to surely transmit the strain in the structural body to the optical fiber, it is necessary to bond the optical fiber so as to prevent disengagement from the structural body. Therefore, the adhesive needs to be applied so as to completely coat the optical fiber when viewed in a section as shown in Fig. 3. Also, in the above general bonding process, it takes about one day until the adhesive is completely cured since the chemically reactive adhesive is used. It is necessary to hold the optical fiber so as to prevent displacement before the adhesive is cured.

As described above, there is a problem that work efficiency is poor since the work process requires great care to ensure high bonding position accuracy, and it takes a long time until completion of the work.

The present invention has been made in view of the above problem, and an object thereof is to provide a bonding method according to claim 4 that enables quick and reliable bonding of an optical fiber to a structural body by a simple process, and a bonding tool according to claim 1 that achieves the method. Another object of the present invention is to provide a method according to claim 6 for producing a structural body to which an optical fiber is bonded by a simple process.

### {Solution to Problem}

To achieve the above object, the present invention provides a bonding tool with the features of claim 1, a bonding method according to claim 4 using this bonding tool and a method according to claim 6 for producing a structural body using the bonding method. The present invention concerns a bonding method for bonding an optical fiber in which a strand is coated with a thermoplastic resin to a surface of a structural body, including the steps of: melting at least one portion of the thermoplastic resin; bringing the portion where the thermoplastic resin is melted of the optical fiber and the surface into contact with each other in a state in which the thermoplastic resin is melted; pressure-bonding the optical fiber to the surface; and cooling and curing the thermoplastic resin.

The present invention also concerns a bonding tool including inter alia: an optical fiber feeding section that feeds an optical fiber in which a strand is coated with a thermoplastic resin to a surface of a structural body; a heater that melts at least one portion of the thermoplastic resin; and a pressure-bonding section that brings the portion where the thermoplastic resin is melted and the surface into contact with each other, and pressure-bonds the optical fiber to the surface.

A third aspect of the present invention is a method for producing a structural body to which an optical fiber in which a strand is coated with a thermoplastic resin is bonded, including the steps of: melting at least one portion of the thermoplastic resin; bringing the portion where the thermoplastic resin is melted of the optical fiber and a surface of the structural body into contact with each other in a state in which the thermoplastic resin is melted; pressure-bonding the optical fiber to the surface; and cooling and curing the thermoplastic resin.

In the present invention, the thermoplastic resin that coats the strand is used as an adhesive. By using the bonding method and a bonding jig of the present invention, it takes only one minute or less from pressure-bonding of the optical fiber to the surface of the structural body to curing. Therefore, a time required for the work is considerably reduced as compared to a conventional method using a chemically reactive adhesive. It is also possible to prevent displacement of the optical fiber before the thermoplastic resin is completely solidified.

Also, by using the method and the bonding tool of the present invention, the optical fiber can be bonded to the structural body in a state in which the strand is coated with the thermoplastic resin. Therefore, the thermoplastic resin allows a strain in the structural body to be transmitted to the optical fiber, so that soundness evaluation can be performed with high accuracy.

### {Advantageous Effects of Invention}

Since the time to curing of the resin can be considerably reduced by the bonding method of the present invention as compared to a conventional bonding process, workability is improved. Since it is also possible to bond the optical fiber without displacing the optical fiber from a predetermined position or disengaging the optical fiber from the structural body, the accuracy of the soundness evaluation using the optical fiber sensor can be improved.

Since the optical fiber feeding section, the heater, and the pressure-bonding section are integrated, the bonding tool of the present invention is easily handled. Also, by using the bonding tool of the present invention, the optical fiber can be bonded to a predetermined position with good position accuracy.

### {Brief Description of Drawings}

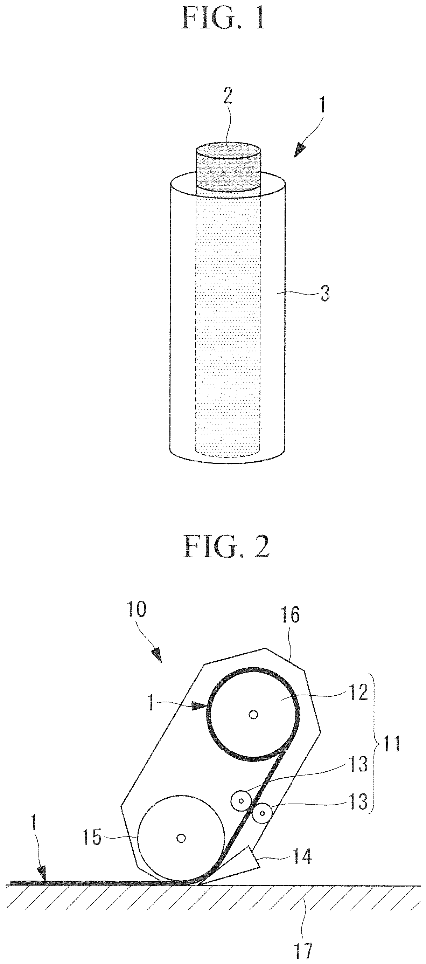

{Fig. 1}
   Fig. 1 is a schematic view of an optical fiber bonded to a surface of a structural body by a method of the present invention.
{Fig. 2}
   Fig. 2 is a schematic view for explaining a bonding jig and a bonding method of the present invention.
{Fig. 3}
   Fig. 3 is a sectional view of a structural body to which an optical fiber is bonded by a conventional method.

### {Description of Embodiments}

### {First Embodiment}

In the following, a bonding method, a bonding jig, and a method for producing a structural body according to a first embodiment are described.

Fig. 1 is a schematic view of an optical fiber applied to the bonding method of the present embodiment. An optical fiber 1 includes a strand 2 having a core and a clad, and a coating portion 3 that coats an outer periphery of the strand 2. In the present embodiment, an optical fiber having a configuration in which another coating portion (polyimide or the like) is provided between the strand 2 and the coating portion 3 may be also employed.

In the present embodiment, materials of the core and the clad are not particularly limited. A diameter of the strand 2 is 0.05 to 0.15 mm.

The coating portion 3 applicable to the bonding method of the present embodiment is formed of a thermoplastic resin. Examples of the thermoplastic resin include polyester-based, styrene-based, and polyethylene-based resins. A thickness of the coating portion 3 is 0.1 to 0.5 mm.

An object to which the optical fiber 1 in Fig. 1 is to be bonded is a structural body such as an aircraft, an automobile, and a wind blade. The structural body is a member of a fiber reinforced resin substrate such as a carbon fiber reinforced resin substrate and a glass fiber reinforced resin substrate, or a metal plate such as aluminum. Also, members made of the above material may be attached together by an adhesive. For example, an epoxy-based adhesive may be applied as the adhesive.

Fig. 2 is a schematic view for explaining the bonding jig of the present embodiment.

In a bonding jig 10, an optical fiber feeding section 11, a heater 14, and a molding roller (pressure-bonding section) 15 are accommodated in a casing 16.

The optical fiber feeding section 11 includes an optical fiber winding roller 12, and two optical fiber feeding rollers 13. The optical fiber 1 is wound around the optical fiber winding roller 12.

The heater 14 is mounted in an optical fiber unwinding direction with respect to the optical fiber feeding section 11. The molding roller 15 is mounted in the optical fiber unwinding direction with respect to the heater 14. The heater 14 is mounted close to the molding roller 15 such that a surface of a structural body 17 and the optical fiber 1 can come into contact with each other before the heated thermoplastic resin is cooled and cured.

The heater 14 is preferably a device that feeds hot air toward the optical fiber (e.g., a dryer). A heater temperature adjusting means (not shown) that adjusts a temperature of the hot air fed from the heater 14 is connected to the heater 14.

In the bonding tool 10, the heater 14 is mounted on an opposite side from the molding roller 15 with respect to the optical fiber 1. That is, the heater 14 can heat a surface of the optical fiber 1 opposite to a surface in contact with the molding roller 15.

The optical fiber 1 unwound from the optical fiber winding roller 12 passes between the optical fiber feeding rollers 13, and is inserted between the molding roller 15 and the structural body 17. The molding roller 15 presses the optical fiber 1 against the surface of the structural body 17.

The bonding jig 10 can move along the surface of the structural body 17 with the molding roller 15 rotating.

A process of bonding the optical fiber to the surface of the structural body by use of the bonding jig 10 is described below.

The bonding jig 10 is mounted at a starting point of a position to mount the optical fiber on the surface of the structural body 17. The optical fiber mounting position is close to a bonding surface of two members in the structural body 17.

At this point, an end portion of the optical fiber 1 unwound from the optical fiber winding roller 12 is inserted between the molding roller 15 and the structural body 17.

Subsequently, the bonding jig 10 is moved along the surface of the structural body 17 so as to follow an optical fiber mounting planned position. In Fig. 2, the bonding jig 10 is moved in a right direction of the paper face.

Along with the movement of the bonding jig 10, the optical fiber winding roller 12, the optical fiber feeding rollers 13, and the molding roller 15 are rotated.
Accordingly, the optical fiber 1 is unwound from the optical fiber winding roller 12, and conveyed to the heater 14 and the molding roller 15 through the optical fiber feeding rollers 13.

The heater 14 heats and melts the thermoplastic resin that coats the surface of the optical fiber 1. Any heating temperature may be employed as long as the thermoplastic resin can be melted. The heating temperature is appropriately set according to the type of the thermoplastic resin. In the present embodiment, it is not necessary to melt the entire thermoplastic resin in a circumferential direction, and it is only necessary to melt the thermoplastic resin at least in a portion in contact with the surface of the structural body 17.

The optical fiber 1 is conveyed to the molding roller 15 in a state in which the thermoplastic resin on the surface is melted. When the optical fiber 1 is held between the molding roller 15 and the structural body 17, the molten thermoplastic resin and the surface of the structural body 17 come into contact with each other, and the molding roller 15 pressure-bonds the optical fiber 1 to the surface of the structural body 17.

After passing through the heater 14, the thermoplastic resin on the surface of the optical fiber 1 is cooled by contact with the molding roller 15 and the structural body 17, and air cooling. When a temperature of the thermoplastic resin is lowered to a melting point or less after the optical fiber 1 adheres to the surface of the structural body 17, the thermoplastic resin is re-cured. Accordingly, the optical fiber 1 is bonded to the structural body 17 in a state in which the strand is coated with the coating portion made of the thermoplastic resin. It takes one minute or less from pressure-bonding of the optical fiber to re-curing.

By moving the bonding jig 10, melting of the thermoplastic resin, pressure-bonding of the optical fiber, and re-curing of the thermoplastic resin described above are continuously performed.

After bonding the optical fiber 1 to the surface of the structural body 17, the optical fiber 1 is coated by further applying a coating material onto the optical fiber 1. For example, PR1750 (product name manufactured by PPG Aerospace) is used as the coating material. The coating material has moisture resistance, high temperature resistance, and low temperature resistance. Therefore, good inspection accuracy is ensured in soundness evaluation of the structural body using the optical fiber.

### {comparative example}

In a bonding jig of a comparative example, a heater is incorporated in and integrated with a molding roller, and the molding roller is regarded as a component that heats and melts the thermoplastic resin. In this case, the heater in Fig. 2 is omitted. Other components are the same as those of the first embodiment. The bonding jig of the comparative example has a simpler structure than that of the first embodiment.

In a bonding method and a method for producing a structural body of the comparative example, by moving the above bonding jig, melting of the thermoplastic resin, pressure-bonding of the optical fiber, and re-curing of the thermoplastic resin are continuously performed.

In the comparative example, when the optical fiber comes into contact with the molding roller, the thermoplastic resin is heated and melted by the molding roller. A temperature of the molding roller and a moving speed of the bonding jig (that is, a feeding speed of the optical fiber) are adjusted such that the thermoplastic resin located at a bonding surface with the structural body is melted, and the thermoplastic resin coats the strand upon re-cured.

After the optical fiber is bonded to the structural body by the method of the comparative example, the coating material is applied onto the optical fiber similarly to the first embodiment.

### {Reference Signs List}

- 1: Optical Fiber
- 2: Strand
- 3: Coating Portion
- 10: Bonding Jig
- 11: Optical Fiber Feeding Section
- 12: Optical Fiber Winding Roller
- 13: Optical Fiber Feeding Roller
- 14: Heater
- 15: Molding Roller (Pressure-Bonding Section)
- 16: Casing

## Claims

1. A bonding tool (10) comprising:
an optical fiber feeding section (11) that is arranged to feed an optical fiber (1) in which a strand (2) is coated with a thermoplastic resin (3) to a surface of a structural body (17);
a heater (14) that is arranged to melt at least one portion of the thermoplastic resin (3); and
a pressure-bonding section (15) that is arranged to bring the portion where the thermoplastic resin (3) is melted and the surface of a structural body (17) into contact with each other, and to pressure-bond the optical fiber (1) to the surface; and
a casing (16) in which the heater (14) and the pressure-bonding section (15) are accommodated,
wherein the pressure-bonding section is formed as a molding roller (15) that is configured to press the optical fiber (1) against the surface of the structural body (17) and the bonding tool is configured such that it can move along the surface of the structural body (17) with the molding roller (15) rotating, wherein the heater (14)is mounted close to the molding roller (15) on an opposite side from the molding roller (15) with respect to the optical fiber (1) so as to be able to melt the thermoplastic resin (3) at least in a portion in contact with the surface of the structural body (17) by heating a surface of the optical fiber (1) opposite to a surface in contact with the molding roller (15) close to the molding roller (15), the bonding tool being **characterised in that**
the optical fiber feeding section (11) includes an optical fiber winding roller (12) around which the optical fiber (1) is to be wound and from which it can be unwound in operation, and a pair of opposed optical fiber feeding rollers (13),
wherein the optical fiber winding roller (12), the optical fiber feeding rollers (13), and the molding roller (15) are configured to be rotated to unwind the optical fiber (1) from the optical fiber winding roller (12) and convey it to the heater (14) and the molding roller (15) through the optical fiber feeding rollers (13), and wherein the optical feeding section (11) is accommodated in the casing (16).

2. The bonding tool (10) according to claim 1, wherein the molding roller (15) is mounted in the optical fiber unwinding direction with respect to the heater (14).

3. The bonding tool (10) according to claim 1 or 2, wherein the heater (14) is mounted close to the molding roller (15) such that a surface of the structural body (17) and the optical fiber (1) can come into contact with each other before the heated thermoplastic resin is cooled and cured.

4. A bonding method for bonding an optical fiber (1) in which a strand (2) is coated with a thermoplastic resin (3) to a surface of a structural body (17) using the bonding tool (10) according to claim 1 to 3, comprising the steps of:
feeding the optical fiber (1) by means of the optical fiber feeding section (11) by rotating the optical fiber winding roller (12), the optical fiber feeding rollers (13), and the molding roller (15) to unwind the optical fiber (1) from the optical fiber winding roller (12) and convey it to the heater (14) and the molding roller (15) through the optical fiber feeding rollers (13);
melting at least one portion of the thermoplastic resin (3) to be in contact with the surface of the structural body (17) by heating a surface of the optical fiber (1) opposite to a surface in contact with the molding roller (15) by means of the heater (14) mounted close to the molding roller (15);
bringing the portion of the optical fiber (1) where the thermoplastic resin (3) is molten and the surface of the structural body (17) into contact with each other in a state in which the thermoplastic resin (3) is molten;
pressure-bonding the optical fiber (1) to the surface; and
cooling and re-curing the thermoplastic resin (3).

5. The bonding method according to claim 4, wherein, by moving the bonding tool (10), melting of the thermoplastic resin (3), pressure-bonding of the optical fiber (1), and re-curing of the thermoplastic resin (3) are continuously performed.

6. A method for producing a structural body (17) to which an optical fiber (1) in which a strand (2) is coated with a thermoplastic resin (3) is bonded, comprising bonding the optical fiber (1) to a surface of the structural body (17) by applying the bonding method of claim 4 or 5.

## Patentansprüche

1. Ein Verbindungswerkzeug (10), das umfasst:
einen Zuführabschnitt (11) für optische Fasern, der angeordnet ist, um eine optische Faser (1), bei der ein Leiter (2) mit einem thermoplastischen Harz (3) beschichtet ist, zu einer Oberfläche eines Strukturkörpers (17) zuzuführen,
eine Heizvorrichtung (14), die angeordnet ist, um mindestens einen Abschnitt des thermoplastischen Harzes (3) zu schmelzen, und
einen Druckverbindungsabschnitt (15), der angeordnet ist, um den Abschnitt, in dem das thermoplastische Harz (3) geschmolzen ist, und die Oberfläche eines Strukturkörpers (17) miteinander in Kontakt zu bringen und die optische Faser (1) mit der Oberfläche unter Druck zu verbinden, und
ein Gehäuse (16), in dem die Heizvorrichtung (14) und der Druckverbindungsabschnitt (15) untergebracht sind,
wobei der Druckverbindungsabschnitt als eine Formrolle (15) ausgebildet ist, die konfiguriert ist, um die optische Faser (1) gegen die Oberfläche des Strukturkörpers (17) zu drücken, und das Verbindungswerkzeug (10) so konfiguriert ist, dass es sich entlang der Oberfläche des Strukturkörpers (17) bewegen kann, während die Formrolle (15) rotiert,
wobei die Heizeinrichtung (14) nahe der Formrolle (15) auf einer der Formrolle (15) gegenüberliegenden Seite in Bezug auf die optische Faser (1) angebracht ist, um das thermoplastische Harz (3) zumindest in einem Abschnitt in Kontakt mit der Oberfläche des Strukturkörpers (17) schmelzen zu können, indem eine Oberfläche der optischen Faser (1) gegenüber einer Oberfläche in Kontakt mit der Formrolle (15) nahe der Formwalze (15) erwärmt wird, wobei das Verbindungswerkzeug (10) **dadurch gekennzeichnet ist, dass**
der Zuführabschnitt (11) für die optische Faser eine Wickelrolle (12) für die optische Faser, um die die optische Faser (1) zu wickeln ist und von der sie im Betrieb abgewickelt werden kann, und ein Paar gegenüberliegender Zuführrollen (13) für die optische Faser umfasst,
wobei die Wickelrolle (12) für die optische Faser, die Zuführrollen (13) für die optische Faser und die Formrolle (15) konfiguriert sind, um gedreht zu werden, um den Lichtwellenleiter (1) von der Wickelrolle (12) für die optische Faser abzuwickeln und ihn durch die Zuführrollen (13) für die optische Faser zu der Heizvorrichtung (14) und der Formrolle (15) zu befördern, und
wobei der Zuführabschnitt (11) für die optische Faser in dem Gehäuse (16) untergebracht ist.

2. Das Verbindungswerkzeug (10) nach Anspruch 1, wobei die Formrolle (15) in einer Abwickelrichtung der optischen Faser in Bezug auf die Heizvorrichtung (14) angebracht ist.

3. Das Verbindungswerkzeug (10) nach Anspruch 1 oder 2, wobei die Heizvorrichtung (14) in der Nähe der Formrolle (15) angebracht ist, so dass eine Oberfläche des Strukturkörpers (17) und die optische Faser (1) miteinander in Kontakt kommen können, bevor das erwärmte thermoplastische Harz abgekühlt und ausgehärtet ist.

4. Ein Verbindungsverfahren zum Verbinden bzw. Bonden einer optischen Faser (1), bei der ein Leiter (2) mit einem thermoplastischen Harz (3) beschichtet ist, mit einer Oberfläche eines Strukturkörpers (17) unter Verwendung des Verbindungswerkzeugs (10) nach einem der Ansprüche 1 bis 3, umfassend die Schritte:
Zuführen der optischen Faser (1) mittels des Zuführabschnitt (11) für die optische Faser durch Drehen der Wickelrolle (12) für die optische Faser, der Zuführrollen (13) für die optische Faser und der Formrolle (15), um die optischen Faser (1) von der Wickelrolle (12) für die optische Faser abzuwickeln und sie durch die Zuführrollen (13) für die optische Faser zu der Heizvorrichtung (14) und der Formrolle (15) zu befördern,
Schmelzen mindestens eines Abschnitts des thermoplastischen Harzes (3), das mit der Oberfläche des Strukturkörpers (17) in Kontakt sein soll, durch Erwärmen einer Oberfläche der optischen Faser (1), die einer mit der Formrolle (15) in Kontakt stehenden Oberfläche gegenüberliegt, mit Hilfe der nahe der Formrolle (15) angebrachten Heizvorrichtung (14),
In-Kontakt-Bringen des Abschnitts der optischen Faser (1), in dem das thermoplastische Harz (3) geschmolzen ist, und der Oberfläche des Strukturkörpers (17) in einem Zustand, in dem das thermoplastische Harz (3) geschmolzen ist,
Druckverbinden der optischen Faser (1) mit der Oberfläche, und
Abkühlen und erneutes Aushärten des thermoplastischen Harzes (3).

5. Das Verbindungsverfahren nach Anspruch 4, wobei durch Bewegen des Verbindungswerkzeugs (10) das Schmelzen des thermoplastischen Harzes (3), das Druckverbinden der optischen Faser (1) und das erneute Aushärten des thermoplastischen Harzes (3) kontinuierlich durchgeführt werden.

6. Ein Verfahren zum Herstellen eines Strukturkörpers (17), mit dem eine optische Faser (1), in der ein Leiter (2) mit einem thermoplastischen Harz (3) beschichtet ist, verbunden bzw. gebondet wird, umfassend ein Verbinden bzw. Bonden der optischen Faser (1) an eine Oberfläche des Strukturkörpers (17) durch Anwendung des Verbindungsverfahrens nach Anspruch 4 oder 5.

## Revendications

1. Outil (10) de collage comprenant :
une partie (11) d'avance d'une fibre optique, qui est agencée pour faire avancer une fibre (1) optique, dans laquelle un cordon (2) est appliqué en revêtement par une résine (3) thermoplastique à une surface d'un corps (17) structural ;
un dispositif (14) de chauffage, qui est agencé pour faire fondre au moins une partie de la résine (3) thermoplastique ; et
une partie (15) de collage par pression, qui est agencée pour mettre la partie où la résine (3) thermoplastique est fondue et la surface d'un corps (17) structural en contact l'une avec l'autre et pour coller par pression la fibre (1) optique à la surface ; et
un boîtier (16), dans lequel le dispositif (14) de chauffage et la partie (15) de collage par pression sont logés,
dans lequel la partie de collage par pression est sous la forme d'un galet (15) de moulage, qui est configuré pour presser la fibre (1) optique sur la surface du corps (17) structural et l'outil de collage est configuré de manière à pouvoir se déplacer sur la surface du corps (17) structural, alors que le galet (15) de moulage tourne, dans lequel le dispositif (14) de chauffage est monté près du galet (15) de moulage du côté opposé à celui du galet (15) de moulage par rapport à la fibre (1) optique, de manière à pouvoir faire fondre la résine (3) thermoplastique au moins dans une partie en contact avec la surface du corps (17) structural en chauffant une surface (1) optique opposée à une surface en contact avec le galet (15) de moulage près du galet (15) de moulage, l'outil de collage étant **caractérisé en ce que** la partie (11) d'avance d'une fibre optique comprend
un galet (12) d'enroulement d'une fibre optique autour duquel la fibre (1) optique peut s'enrouler et dont il peut se dérouler en fonctionnement, et une paire de galet (13) opposés d'avance de fibre optique,
dans lequel le galet (12) d'enroulement d'une fibre optique, les galets (13) d'avance de fibre optique et le galet (15) de moulage sont configurés pour être tournés pour dérouler la fibre (1) optique du galet (12) d'enroulement d'une fibre optique et l'envoyer au dispositif (14) de chauffage et au galet (15) de moulage par l'intermédiaire des galets (13) d'avance d'une fibre optique, et dans lequel la partie (11) d'avance d'une fibre optique est logée dans le boîtier (16).

2. Outil (10) de collage suivant la revendication 1, dans lequel le galet (15) de moulage est monté dans la direction du déroulement d'une fibre optique par rapport au dispositif (14) de chauffage.

3. Outil (10) de collage suivant la revendication 1 ou 2, dans lequel le dispositif (14) de chauffage est monté près du galet (15) de moulage, de manière ce qu'une surface du corps (17) structural et de la fibre (1) optique puissent venir en contact l'une avec l'autre avant que la résine thermoplastique chauffée ne soit refroidie et durcie.

4. Procédé de collage d'une fibre (1) optique, dans lequel on applique en revêtement un cordon (2) par une résine (3) thermoplastique à une surface d'un corps (17) structural, en utilisant l'outil (10) de collage suivant la revendication 1 à 3, comprenant les stades dans lesquels :
on fait avancer la fibre (1) optique au moyen de la partie (11) d'avance d'une fibre optique, en faisant tourner le galet (12) d'enroulement d'une fibre optique, les galets (13) d'avance d'une fibre optique et le galet (15) de moulage pour dérouler la fibre (1) optique du galet (12) d'enroulement d'une fibre optique et l'envoyer au dispositif (14) de chauffage et au galet (15) de moulage en passant par les galets (13) d'avance d'une fibre optique ;
on fait fondre au moins une partie de la résine (3) thermoplastique à mettre en contact avec la surface du corps (17) structural en chauffant la surface de la fibre (1) optique opposée à une surface en contact avec le galet (15) de moulage au moyen du dispositif (14) de chauffage monté près du galet (15) de moulage ;
on met la partie de la fibre (1) optique où la résine (3) thermoplastique est fondue et la surface du corps (17) structural en contact l'une avec l'autre dans un état, dans lequel la résine (3) thermoplastique est fondue ;
on colle par pression la fibre (1) optique à la surface ; et
on refroidit et on redurcit la résine (3) thermoplastique.

5. Procédé de collage suivant la revendication 4, dans lequel en déplaçant l'outil (10) de collage, on effectue en continu la fusion de la résine (3) thermoplastique, du collage par pression de la fibre (1) optique, et le redurcissement de la résine (3) thermoplastique.

6. Procédé de production d'un corps (17) structural, auquel une fibre (1) optique, dans lequel un cordon (2) est revêtu d'une résine (3) thermoplastique, est collée, comprenant coller la fibre (1) optique à une surface du corps (17) structural, en appliquant le procédé de collage de la revendication 4 ou 5.
